# EUROPEAN PATENT APPLICATION

(11) **EP 3 501 823 A1**
(43) Date of publication of application: **26.06.2019**
(21) Application number: 18213611.9
(22) Date of filing: 18.12.2018
(51) Int. Cl.: B32B 27/08

(54) **FILM WITH LOW BREAKDOWN VOLTAGE**

(30) Priority: 22.12.2017 EP 17210215
(71) Applicant: Flexopack S.A., 194 00 Koropi (GR)
(72) Inventor: GKINOSATIS, Dimitris, 19400 Koropi Attica (GR)
(74) Representative: Isarpatent

(57) **Abstract**

The invention relates to a plastic film having a breakdown voltage of less than 10 KV, comprising an outer and an inner layer comprising from 0.1 to 15% by weight polyether copolymer, and at least one intermediate layer comprising polyether copolymer and/or thermoplastic metal compound.

## Description

The invention relates to a plastic film having a breakdown voltage of less than 10 KV, comprising an outer and an inner layer comprising from 0.1 to 15% by weight polyether copolymer, and at least one intermediate layer comprising polyether copolymer and/or thermoplastic metal compound.

### BACKGROUND

Plastic films with antistatic properties have been often used in different packaging applications. Such films are very common in packaging of electronics and materials in powder form. The ongoing increase of production in these sectors demand a higher level of antistatic protection, often combined with other requirements such as oxygen and water vapor barrier.

A challenge in the production of such films is to achieve reduction of the breakdown voltage. When low breakdown voltage is needed, special conductive carbon is usually added to different layers of the film. However, this method obviously destroys the transparency of the film. Furthermore, production using heavy loads of conductive carbon is difficult and the mechanical properties of the films are deteriorated.

The present invention provides the possibility to produce a film having breakdown voltage less than 10KV, high oxygen and water vapor barrier and very good transparency. The film can replace conductive black films in cases where addition of carbon black is not desired or prohibitive.

### SUMMARY OF THE INVENTION

The invention provides a film having a breakdown voltage of less than 10 KV comprising,
- an outer and an inner layer comprising from 0.1% to 15% by weight polyether copolymer
- at least one intermediate layer comprising polyether copolymer and/or thermoplastic metal compound.

Preferably the film has an average thickness of 50 to 300, more preferably 60 to 150 microns.

Further preferred options of the invention will be explained in the detailed description of the invention.

### DEFINITIONS

In this application the following definitions are used:
The term "film" refers to a flat or tubular flexible structure of thermoplastic material.

The term "heat shrinkable" refers to a film that shrinks at least 10% in at least one of the longitudinal and transverse directions when heated at 90°C for 4 seconds. The shrinkability is measured according to ASTM 2732.

The phrase "longitudinal direction" or "machine direction" herein abbreviated "MD" refers to a direction along the length of the film.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

The phrase "intermediate layer" refers to any layer of the film that is neither outer nor inner layer. A film may comprise more than one intermediate layers.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein, the term "polyolefin" includes all the polymers produced by polymerization of olefins. Polyethylene, polypropylene, polybutylene and other products are included in this general category.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low-density polyethylene (LLDPE), medium density polyethylene (MDPE), very low-density polyethylene (VLDPE), ultra-low density polyethylene (ULDPE), metallocene catalysed polymers and polyethylene plastomers and elastomers.

In these cases, the alpha olefin can be propene, butene, hexene, octene etc as known in the art.

As used herein the term "homogeneous ethylene alpha olefin copolymers" refer to ethylene alpha olefin copolymers having a molecular weight distribution MWD (M_{w}/Mₙ) of less than 2.7 as measured by GPC. Typical examples of these polymers are AFFINITY from DOW or Exact from Exxon.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is less than 40% by weight. Abbreviation used is EMA.

As used herein the phrase "ethylene vinyl acetate copolymer" refers to copolymers of ethylene and vinyl acetate. Abbreviation used is EVA.

As used herein the term "oxygen barrier polymer" refers to polymers that do not allow the ingress of oxygen in packs. Typical materials are polyamide, EVOH or PVDC.

As used herein, the term EVOH refers to saponified products of ethylene vinyl ester copolymers. The ethylene content is typically in the range of 25% to 50% per mol.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term polyamide refers to homopolymers and copolymers that include amide linkages as well known in the art.

As used herein the term "ionomer" refers to ethylene-acid copolymers which have been neutralized by metals such as sodium, zinc, lithium or others.

The acid used is usually methacrylic or acrylic acid.

As used herein, the term "ethylene acid copolymer "refers to copolymers of ethylene with acid, most usually methacrylic or acrylic acid.

As used herein, the term "polyester" includes crystalline polymers, amorphous polymers and polyester elastomers. Common polyesters are crystalline PET (polyethylene terephthalate), amorphous PET, PETG (glycol modified polyethylene terephthalate), PBT (polybutylene terephthalate), PTT (polytrimethylene terephthalate), PBN (polybutylene naphthalate), PEN (polyethylene naphthalate), polyester-ether block copolymers and polyester-ester block copolymers of hard and soft blocks.

Other polyester materials are also included in the above definition.

As used herein the term "polybutylene" refers to butene-1 homopolymers and copolymers. Useful copolymers comprise ethylene mer units. Ethylene content should be generally less than 50% by weight.

All measurement methods mentioned herein are readily available for the skilled person. For example, they can be obtained from the American National Standards Institute at: www.webstore.ansi.org

All percentages used are per weight unless stated otherwise.

### DETAILED DESCRIPTION OF THE INVENTION

The film according to the invention comprises
- an outer and an inner layer comprising from 0.1 to 15% by weight polyether copolymer
- at least one intermediate layer comprising polyether copolymer and/or thermoplastic metal compound,
and has a breakdown voltage of less than 10 KV.

In a preferred embodiment the average thickness of the film is in the range of 50 to 300 microns, preferably 60 to 150 microns, more preferably 70 to 140 microns.

In a further preferred embodiment, the inner and/or outer layer comprises at least one polyolefin.

In a further preferred embodiment, the film comprises an oxygen barrier material, such as EVOH, PVDC and/or polyamide.

### FILM CONSTRUCTION

Preferably the film comprises 3 to 15 layers, more preferably 5 to 12 layers.

A typical example of the film construction in 7-layer mode is
Outer layer/intermediate layer/tie layer/barrier layer/tie layer/intermediate layer/inner layer
A typical example of the film construction in 5-layer mode is
Outer layer/tie layer/barrier layer/tie layer/inner layer
A typical example of the film construction in 3-layer mode is
Outer layer/intermediate layer/inner layer
The film is preferably produced by the hot blown film method and is not heat shrinkable.

### Barrier layer(s)

The film in a preferable embodiment contains high oxygen barrier materials so that it protects the components of the pack from the detrimental effect of oxygen ingress. EVOH is a preferred option but also polyamide and PVDC are viable alternatives. The EVOH is preferably 24 to 50% ethylene per mol, more preferably 27 to 48%.

In another preferred embodiment of the invention, the barrier polymer is polyamide. Most suitable polyamides are polyamide 6 and copolymer 6/66 or 6/12.

The thickness of the barrier layer is preferably 2 to 20 microns thick.

In a preferred option, the barrier layer comprises a polyether copolymer and/or a thermoplastic metal compound.

### Intermediate layer(s)

Preferably, the intermediate layers comprise different polyolefins. Preferred polyolefins are ethylene alpha olefin copolymers, where alpha olefin is preferably butene, hexene or octene.

In a preferred embodiment the ethylene alpha olefin copolymers are random copolymers with densities from 0.870 g/cm³ up to 0.960 g/cm³. In a further preferred embodiment, the molecular weight distribution MWD (M_{w}/Mₙ) as measured by GPC of the ethylene alpha olefin copolymers is less than 10, preferably less than 5, preferably less than 3.

The above polyolefins are preferably blended to polyether copolymers and/or thermoplastic metal compounds.

The percentage per weight of these materials in the intermediate layers is 0.1 to 30%, preferable 5 to 25%, more preferable 10 to 20%.

### Tie layer(s)

As well known in the art, there is no natural adhesion between polyolefins and oxygen barrier polymers such as EVOH.

Suitable materials for the tie layer process include maleic anhydride modified EVA, maleic anhydride modified polyethylene, maleic anhydride modified EMA, maleic anhydride modified elastomer, partially saponified EVA copolymer and polyurethane elastomer.

In the tie layers also polyamides can be used, given the strong natural adhesion between polyamide and EVOH. Preferred polyamides are polyamide 6, polyamide 6/66 and polyamide 6/12.

The tie layers also are preferably blended to polyether copolymers and/or thermoplastic metal compounds (with the same way as described above for the intermediate layers).

### Outer layer

The outer layer of the film preferably comprises ethylene alpha olefin copolymers and/or low-density polyethylene (LDPE) produced by Ziegler Natta or metallocene catalyst. Polypropylene, ethylene vinyl acetate, ethylene methyl acrylate, ethylene butyl acrylate, ionomer, polyester and polyamide are also possible.

The outer layer comprises (per weight) 1 to 12 % of polyether copolymer, preferably 3 to 10 %.

### Inner layer

The inner layer of the film would be able to seal the film to itself to secure that no leakers and oxygen influx is allowed. This could be detrimental to the product packed.

Suitable materials for the inner layer include different polyolefins, preferably ethylene alpha olefin copolymers, low density polyethylene, polypropylene, ethylene vinyl acetate, ethylene methyl acrylate, ionomer, ethylene butyl acrylate and the like.

The inner layer preferably comprises 1 to 12 % by weight of polyether copolymer, more preferable 3 to 10 %.

In general, the above layers may comprise further well known in the art additives such as antiblock, slip, antifog, polymer processing enhancers and others.

### Polyether copolymers

Preferred polyether copolymers are copolymers with polyolefins, polyamides or polyester. A typical example of a polyether copolymer useful for the invention is Irgastat P18FCA from BASF or Pelestat from Sanyo Chemical.

The preferred melt flow index(MFI) of the polyether copolymer is more than 4 at 190°C and 21.18 N measured according to ASTM D 1238.

### Thermoplastic metal compound

Extrudable polyolefin compounds of metals and metal oxides are used as alternatives to polyether copolymers. Such compounds may comprise zinc oxides, zinc cations, iron, titanium and the like.

The preferred method for producing the film of the present invention is how blown film as well known in the art.

### EXMAPLES

### EXAMPLE 1

From a commercial hot blown film line, we produced the following film:
*Outer layer, thickness 30 microns
*Intermediate layer, thickness 30 microns
*Inner layer, thickness 30 microns

Outer layer and inner layer was a blend of
89% LDPE+ 10% polyether copolymer+ 1% slip antiblock masterbatch.
LDPE density was 0.923 while MFI was 0.75 under 190C/2.16 kilos

The intermediate layer was a blend of
80% ethylene hexene copolymer+ 20% polyether copolymer
The density of ethylene hexene copolymer was 0.919 while MFI was 1 under 190°C/2.16 kilos
Polyether copolymer used was Irgastat P18FCA.

### EXAMPLE 2

Outer layer, thickness 20
Intermediate layer, thickness 10
Tie layer, thickness 6
Barrier layer, thickness 6
Tie layer, thickness 6,
Intermediate layer, thickness 20
Inner layer, thickness 22

Outer layer and inner layer was a blend of
89% LDPE+ 10% polyether copolymer+ 1% slip antiblock masterbatch.
LDPE density was 0.923 while MFI was 0.75 under 190C/2.16 kilos

The intermediate layer was a blend of
80% ethylene hexene copolymer+ 20% polyether copolymer
The density of ethylene hexene copolymer was 0.919 while MFI was 1 under 190°C/2.16 kilos

The Polyether copolymer used was Irgastat P18FCA
EVOH used was 38% mol type and tie layer used was maleic anhydride grafter LLDPE (Modic M804).

### EXAMPLE 3

In example 3 the polyether copolymer was substituted by SHELFPLUS thermoplastic iron based compound from Albis.

### COMPARATIVE EXAMPLE

The comparative example was like example 2 but in the blends the polyether copolymer was replaced by LDPE of density 0.924 and MFI 0.7 (190C, 21.6 N).

### BREAKDOWN VOLTAGE

The breakdown voltage was measured as known in the art according to the norm EN 60243 and the norm IEC 61340-4-4. Prior to the measurement the film was climatized at 23°C and 20% RH for three days.

The breakdown of the film of example 1 was found to be 4 KV.
The breakdown voltage of film of example 2 was found to be 8 KV.
The breakdown voltage of the film of example 3 was found to be 9 KV.
The breakdown voltage of the film of the comparative example was found to be 28 KV.

Further, all films were transparent and processing was easy (same as comparative example).

## Claims

1. A plastic film having a breakdown voltage of less than 10 KV, comprising
- an outer and an inner layer comprising from 0.1 to 15% by weight polyether copolymer
- at least one intermediate layer comprising polyether copolymer and/or thermoplastic metal compound.

2. The plastic film of claim 1, where the thickness of the film is between 50 and 300 microns.

3. The plastic film of claim 2, where the thickness of the film is between 60 and 150 microns.

4. The plastic film of one or more of the preceding claims, where the film comprises an oxygen barrier material.

5. The plastic film of claim 4, where the oxygen barrier material is EVOH.

6. The plastic film of one or more of the preceding claims, where the outer and or inner layer comprises polyethylene or polypropylene.

7. The plastic film of one or more of the preceding claims, where the polyether copolymer is a block copolymer.

8. The plastic film of one or more of the preceding claims, where the polyether copolymer is polyolefin, polyamide or polyester copolymer.
